Europäisches Patentamt

European Patent Office

Office européen des brevets

(19)

(11) Veröffentlichungsnummer: **0 060 966**
**B1**

(12) # EUROPÄISCHE PATENTSCHRIFT

(45) Veröffentlichungstag der Patentschrift:
**08.05.85**

(51) Int. Cl.⁴: **B 65 F  3/00,** B 65 F  5/00,
B 65 G  47/18

(21) Anmeldenummer: **82100117.9**

(22) Anmeldetag: **09.01.82**

(54) **Müllsammel- und Transportsystem.**

(30) Priorität: **18.03.81  DE 3110540**

(43) Veröffentlichungstag der Anmeldung:
**29.09.82 Patentblatt 82/39**

(45) Bekanntmachung des Hinweises auf die Patenterteilung:
**08.05.85 Patentblatt 85/19**

(84) Benannte Vertragsstaaten:
**AT BE CH DE FR GB LI NL SE**

(56) Entgegenhaltungen:
**BE - A - 837 123**
**DE - A - 2 723 278**
**FR - A - 2 336 320**

(73) Patentinhaber: **Lindemann Maschinenfabrik GmbH,
Erkrather Strasse 401, D-4000 Düsseldorf 1 (DE)**

(72) Erfinder: **Stodt, Eberhard, Am Pflanzkamp 40,
D-4000 Düsseldorf (DE)**
Erfinder: **Kaldenbach, Erwin, Berliner Strasse 58,
D-4030 Ratingen (DE)**

(74) Vertreter: **Bergen, Klaus, Dipl.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Müllsammel- und Transportsystem unter Verwendung eines Müllfahrzeugs mit einem durch mindestens eine Trennwand in mindestens zwei separate Kammern unterteilten Sammelbehälter, wobei jeder Kammer jeweils mindestens eine Einfüllöffnung zugeordnet ist und die Einfüllöffnungen mit jeweils mindestens einer dazwischen angeordneten Trennwand nebeneinander in einer hochschwenkbaren, den Sammelbehälter verschließenden Tür angeordnet sind, und jede Trennwand zwischen den Einfüllöffnungen in Schließlage der Tür an die entsprechende Trennwand zwischen den Kammern anschließt, und einer Entleerungsstation mit Entleerungsöffnungen und jeweils einer zwischen diesen, der zugehörigen Trennwand zwischen den Einfüllöffnungen des Müllfahrzeugs entsprechend angeordneten Trennwand.

Ein derartiges, aus der DE-AS 2 558 433 bekanntes System arbeitet hinsichtlich des Einsammelns von in unterteilten Behältern getrennt bereitgestellten Wertstoffen zufriedenstellend. Jedoch tritt beim gleichzeitigen Entladen der eingesammelten Wertstoffe wieder eine mehr oder weniger starke Vermischung ein, die die vorherigen Bemühungen des getrennten Bereitstellens und Einsammelns zumindest teilweise wieder zunichte macht. Die Schwierigkeiten entstehen dadurch, daß bereits zu Beginn des Hochschwenkens der Tür des Müllfahrzeugs und während des gesamten Entleerungsvorgangs in der Entleerungsstation die aus den gefüllten Kammern des Sammelbehälters herausfallenden und bis dahin voneinander getrennt gehaltenen Werkstoffe sich im Bereich der die Trennwände des Sammelbehälters und der Entleerungsstation enthaltenen Vertikalebene(n) durch Verhaken und/oder seitliches Abgleiten miteinander vermischen. Dieser Bereich erstreckt sich bei dem bekannten System von der Trennungsebene zwischen der hochschwenkbaren Tür und dem Sammelbehälter ausgehend hinunter bis etwa in Höhe des Bodens, auf dem sich das Müllfahrzeug an der Entleerungsstation befindet und wo die Entleerungsöffnungen als Einlaß eines Bunkers oder dgl. mit der oder den zwischengeordneten Trennwand bzw. -wänden vorgesehen sind.

Um dem Problem des zuvor erwähnten, unerwünschten Vermischens der getrennt eingesammelten Wertstoffe zu begegnen, bestünde zwar die Möglichkeit, daß man den Müllwagen so baut, daß die Kammern nacheinander getrennt entleert werden können. Allein durch diese Maßnahme kann jedoch auch nicht verhindert werden, daß insbesondere zu Beginn des Entleerungsvorganges das aus der einen Kammer herausfallende Material in die einer benachbarten Kammer zugeordnete Abkippöffnung fällt. Außerdem wären auch die Baukosten für Mehrkammer-Müllwagen mit getrennter Entleerbarkeit der Kammern unerwünscht hoch. Der entscheidenste Nachteil einer derartigen Bauweise ist jedoch darin zu sehen, daß die Entleerungszeit entsprechend der Anzahl der Kammern vervielfacht werden würde, was wiederum bei einer begrenzten Anzahl von Kippstellen nicht vertretbar ist, weil sich dann die Sammelfahrzeuge in der Hauptverkehrszeit so stark stauten, daß der Einsammelplan in der dafür vorgesehenen Zeit nicht eingehalten werden könnte. Zwar könnte dieser Nachteil wiederum durch eine Erhöhung der Anzahl der Sammelfahrzeuge und/oder der Kippstellen ausgeglichen werden, was jedoch zu untragbar hohen Zusatzkosten führen würde.

Der Erfindung liegt die Aufgabe zugrunde, das System bzw. die zu verwendenden Müllsammelfahrzeuge dahingehend zu verbessern, daß ein Miteinander-Vermischen der in den Kammern des Müllfahrzeugs getrennt gesammelten Wertstoffe sowohl bei Einzelentleerung als auch bei gleichzeitiger Entleerung aller Kammern in jeder Phase des Entladevorgangs weitgehend vermieden wird.

Diese Aufgabe wird erfindungsgemäß dadurch gelöst, daß jeder Trennwand des Müllfahrzeugs eine Verbindungswand zugeordnet ist, die einen dichten Anschluß dieser Trennwand an zugeordneten Trennwände der Entleerungsstation bereits zu Beginn des Öffnens der Fahrzeugtür sicherstellt. Diese überraschend einfache Maßnahme läßt sich in einer ersten Alternative besonders vorteilhaft dadurch ausgestalten, daß jede Trennwand zwischen den Einfüllöffnungen über die Dicke der Tür hinaus soweit verlängert ist, daß sie einerseits die entsprechende Trennwand zwischen den Kammern ausreichend weit überlappt, um bei hochgeschwenkter Tür noch an die zugehörige Trennwand zwischen den Kammern anzuschließen, und andererseits bereits bei noch geschlossener Tür des an der Entleerungsstation anlegenden Müllfahrzugs nahe an die zugehörige Trennwand zwischen den Entleerungsöffnungen heranragt. Durch diese einfache Maßnahme am Müllfahrzeug und gegebenenfalls eine entsprechende Anpassung der Trennwand oder Trennwände an der Entleerungsstation wird der eingangs erwähnte Bereich bei in Entleerungsposition stehendem Müllfahrzeug in einem weiten Bereich trennend überbrückt. Damit werden die Wertstoffe während der Entleerungsphase auch in der Übergangszone zwischen dem Sammelbehälter des Müllfahrzeugs und der Entleerungsstation überraschend einfach weitgehend voneinander getrennt gehalten.

In bevorzugter Ausführung weist bzw. weisen die zwischen den Einfüllöffnungen der Tür angeordnete(n) Trennwand oder -wände jeweils etwa die Form eines Kreissektors auf, bei dem der Mittelpunkt des Kreises auf der Schwenkachse der Tür liegt. So läßt sich eine derartige Trennwand auf einfache Weise beim Verschwenken zusammen mit der Tür an dem Sammelbehälter aus- und einfahren, wobei durch die kreisbogenförmige Außenkontur der Trennwand eine optimale Anpassung der Anschlußverbindung an die zugehörige Trennwand der Entleerungsstation möglich ist.

In Ausgestaltung der Erfindung kann (können) die Trennwand (Trennwände) zwischen den Einfüllöffnungen der Tür jeweils dicht neben der zugehörigen Trennwand des Sammelbehälters in diesen einschwenkbar sein.

Um trotz der in den Sammelbehälter einschwenkbaren Trennwände glatte Außenflächen an den Trennwänden des Sammelbehälters für einen reibungslosen Materialfluß beim Ein- und Auspressen des Materials in bzw. aus dem Sammelbehälter zu erhalten, kann es in alternativer Ausgestaltung der Erfindung auch zweckmäßig sein, daß die Trennwand oder -wände des Sammelbehälters zur Aufnahme der jeweils zugehörigen in den Sammelbehälter einschwenkbaren Trennwand zwischen den Einfüllöffnungen doppelwandig ausgebildet ist bzw. sind.

Ein möglichst ungehinderter Übergang des Materials aus dem Sammelbehälter des Müllfahrzeugs in die Entleerungsöffnungen der Entleerungsstation kann des weiteren dadurch begünstigt werden, daß die Trennwand oder -wände zwischen den Entleerungsöffnungen der Entleerungsstation bis an die Peripherie des Schwenkkreises der verschwenkbaren Tür heranragt bzw. heranragen und im Anschlußbereich zu der jeweils zugehörigen verschwenkbaren Trennwand zwischen den Einfüllöffnungen der Tür jeweils eine mit dieser Trennwand korrespondierende konzentrische Ausnehmung aufweist bzw. aufweisen.

Gemäß einer vorteilhaften Weiterbildung der Erfindung kann die Tür des Müllfahrzeuges in der oder den jeweils die Trennwand zwischen den Einfüllöffnungen enthaltenden Ebenen je einen Schlitz, vorzugsweise am freien Ende der Tür aufweisen, der zum Anpassen der jeweils zugehörigen Trennwand der Entleerungsstation von der Unterseite her sich über die Dicke der Tür erstreckt und bis an die verschwenkbare Trennwand an der Tür heranragt. Durch diese Maßnahme kann der trennwandlose Bereich noch weiter verringert und der Anschlußbereich zwischen der ausschwenkbaren Trennwand an der Tür des Müllfahrzeugs und der zugehörigen hochragenden Trennwand der Entleerungsstation schon beim Anlegen des Müllfahrzeuges an der Entleerungsstation und noch vor dem Öffnen der Tür weitgehend überbrückt werden. Damit kann ein Vermischen der unterschiedlichen, getrennt gesammelten Wertstoffe beim Beginn oder während des Entleerungsvorgangs nahezu völlig ausgeschlossen werden.

Für eine möglichst weitgehende Annäherung bis hin zum dichten Anliegen der aneinandergrenzenden Trennwände des Müllfahrzeugs und der Entleerungsstation ist es vorteilhaft, wenn zumindest der über die Entleerungsöffnungen nach oben ragende Abschnitt der zwischen diesen Öffnungen angeordneten Trennwand oder Trennwände in seiner Längsrichtung und/oder Höhe verstellbar ist. Die Trennwand der Entleerungsstation läßt sich dann mit großer Genauigkeit der Trennwand an der Tür des Müllfahrzeuges anpassen, so daß der ursprüngliche trennwandlose Bereich weitgehend oder sogar völlig durch die verschwenkbare Trennwand des Müllfahrzeugs bzw. verstellbare Trennwand der Entleerungsstation überbrückt ist und die Wertstoffe aus den einzelnen Kammern auch beim Entladen völlig voneinander getrennt bleiben.

In einer weiteren Ausführung kann das Müllfahrzeug für jede Kammer des Sammelbehälters eine Tür mit mindestens einer Einfüllöffnung aufweisen und von den aneinandergrenzenden Türen jeweils mindestens eine an der der angrenzenden Tür zugewandten Seite mit einer Trennwand versehen sein, so daß sich die Türen in beliebiger Reihenfolge nacheinander oder mehrere oder alle Türen gleichzeitig hochschwenken lassen. Die Werkstoffe bleiben beim gleichzeitigen Entladen mehrerer Kammern des Sammelbehälters durch die verschwenkbaren Trennwände an den Türen getrennt.

In einer zweiten Alternative wird die der Erfindung zugrundeliegende Aufgabe bei einem Müllsammel- und Transportsystem gemäß Oberbegriff des Anspruchs 10 dadurch gelöst, daß die zwischen den Kammern befindliche Trennwand über das türseitige Ende des Sammelbehälters hinaus um einen mindestens der Dicke der im Bereich der die Trennwand enthaltenden Ebene geschlitzten Tür entsprechenden Betrag verlängert ist und mit ihrer freien, vertikalen Abschlußkante mit einer ebenfalls vertikalen Abschlußkante der Trennwand der Entleerungsstation korrespondiert.

Bei dieser auf demselben Grundgedanken basierenden, erfindungsgemäßen Lösung entfällt also die jeweils zwischen zwei benachbarten Einfüllöffnungen in der den Sammelbehälter verschließenden Tür vorgesehene Trennwand, vielmehr ragt im entsprechenden Bereich die Verlängerung der Trennwand der Sammelbehälterkammern durch die Tür oder zumindest in die Türwand hinein. Dadurch können auch unterschiedlich schwer beladene Fahrzeuge dicht an die ortsfeste Trennwand der Entleerungsstation heranfahren, da aufgrund der korrespondierenden vertikalen Abschlußkanten auch bei sich aus dem Federn hebendem Fahrzeug während des Entladens keine Spaltveränderung zwischen zusammenwirkenden Trennwänden des Fahrzeugs einerseits und der Entleerungsstation andererseits eintreten und somit auch keine Verschlechterung des Trenneffektes durch einen sich vergrößernden Spalt zwischen den Trennwänden auftreten kann.

Vorteilhafte Ausgestaltungen dieses Lösungsvorschlags werden in den Ansprüchen 11 bis 14 angegeben und sind hinsichtlich ihrer Eigenschaften auch im Zusammenhang mit den vorstehenden Ausführungen zu den Ausgestaltungen des ersten Alternativvorschlages zu sehen.

Die Erfindung wird nachfolgend anhand eines in der Zeichnung dargestellten Ausführungsbeispiels näher erläutert. Es zeigt

Fig. 1 eine erfindungsgemäße Ausführungsform des Müllsammel- und Transportsystems mit einem an einer Entleerungsstation anlegenden Müllfahrzeugs, in teilweise geschnittener Seitenansicht;

Fig. 2 das Müllfahrzeug und die Entleerungsstation in Seitenansicht entlang der Schnittlinie II-II der Fig. 1;

Fig. 3 das Müllfahrzeug und die Entleerungsstation gemäß Fig. 1, in Draufsicht;

Fig. 4 bis 6 eine weitere erfindungsgemäße Ausführungsform des Müllsammel- und Transportsystems, in den Fig. 1 bis 3 entsprechenden Ansichten; und

Fig. 7 eine andere Ausführungsform des Müllfahrzeugs, in einer den Fig. 2 und 5 entsprechenden Ansicht.

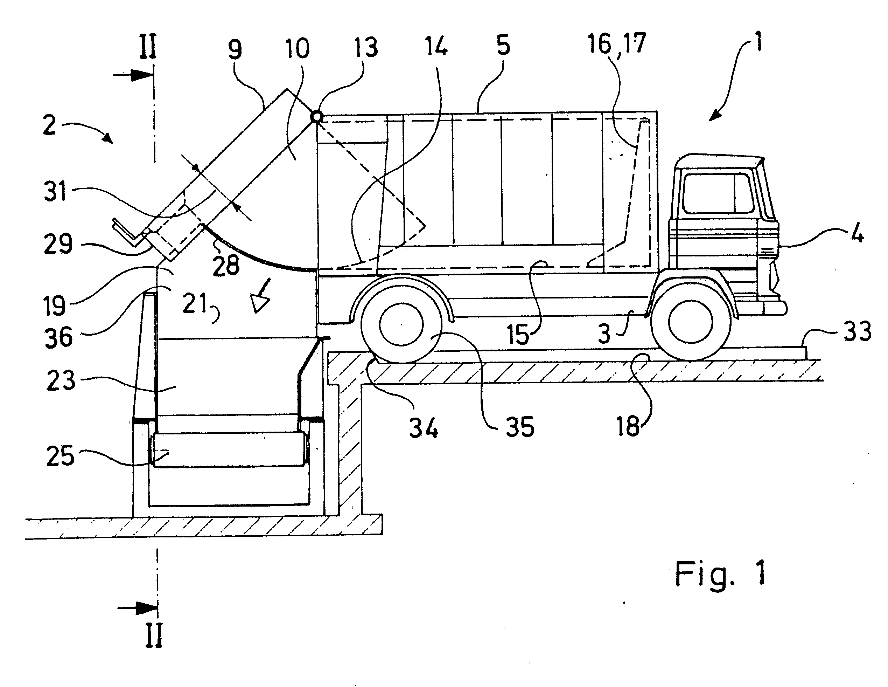

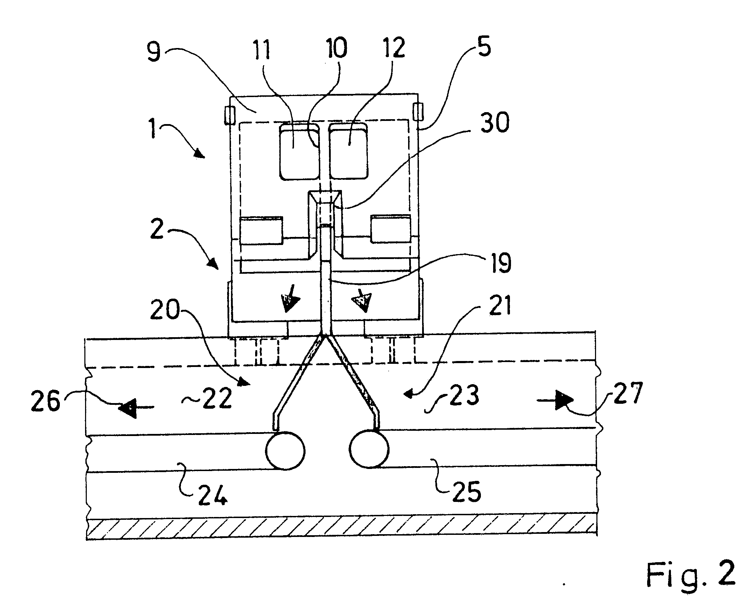

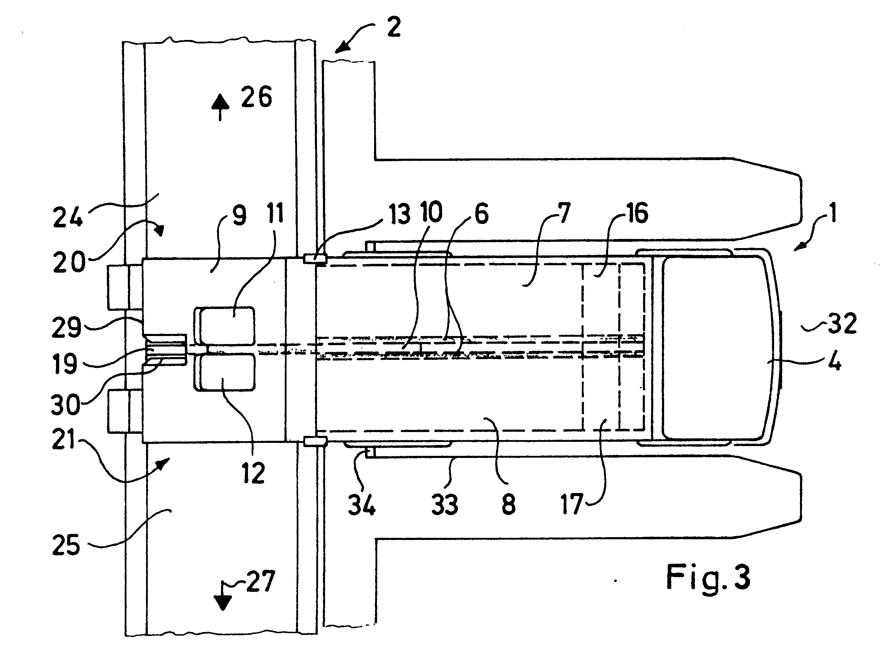

Bei dem erfindungsgemäßen Müllsammel- und Transportsystem nach den Fig. 1 bis 3 wird der von einem Müllfahrzeug 1 nach Wertstoffen, z. B. Glas, Papier und Restmüll getrennt eingesammelte Müll an einer Entleerungsstation 2 entladen.

Um den Müll während des Transports getrennt halten zu können, besitzt der auf einen gemeinsamen Tragrahmen 3 mit dem Fahrerhaus 4 angeordnete Sammelbehälter 5 für den Müll zwei durch eine vertikale Trennwand 6 entlang der Längsmittelebene des Behälters 5 voneinander getrennte Kammern 7, 8 für die getrennt eingesammelten Wertstoffe.

An dem dem Fahrerhaus 4 gegenüberliegenden Ende des Sammelbehälters 5 ist eine Tür 9 mit zwei durch eine vertikale Trennwand 10 voneinander getrennten Einfüllöffnungen 11, 12 für die Wertstoffe vorgesehen. Die Tür 9 ist an einer an der hinteren Oberkante quer zur Längsmittelebene des Sammelbehälters 5 verlaufenden Achse 13 verschwenkbar in der Weise angelenkt, daß die Tür 9 den Sammelbehälter 5 verschließende Stellung in eine in der Zeichnung dargestellten Stellung hochgeschwenkt werden kann, in der Sammelbehälter 5 zum gleichzeitigen Entleeren der in den Kammern 7, 8 getrennt gehaltenen Wertstoffe geöffnet ist.

Innerhalb der Tür 9 und am angrenzenden Ende des Sammelbehälters 5 sind in bekannter Weise Transport- und Verdichtungsvorrichtungen, beispielsweise Schaufeln oder Schnecken zum Einbringen des Mülls in den Sammelbehälter 5 angeordnet, die jedoch nicht dargestellt sind, um die Zeichnung übersichtlich zu halten.

Die Trennwand 10 zwischen den Einfüllöffnungen 11, 12 an der Tür 9 weist die Form eines Kreissektors auf, bei dem der Mittelpunkt des den Sektor einschließenden Kreises auf der Schwenkachse 13 der Tür 9 liegt, so daß die Trennwand 10 ohne weiteres zusammen mit der Tür verschwenkt werden kann. Da die Peripherie 14 des Kreisbogens der somit beim Schließen der Tür 9 in den Sammelbehälter 5 einschwenkbaren Trennwand 10 bis auf den Boden 15 dieses Behälters 5 hinabreicht und zudem diese Trennwand 10 in der Verlängerung der Ebene angeordnet ist, in der die zur Aufnahme der verschwenkbaren Trennwand 10 doppelwandig ausgebildete Trennwand 6 des Sammelbehälters 5 liegt, ist die Anschlußverbindung der Trennwand 6 des Behälters 5 und der Trennwand 10 an der Tür 9 in jeder Stellung der Tür 9 sichergestellt.

Zum Entladen der Wertstoffe sind im Innern des Sammelbehälters 5 den Querschnitt der Kammern 7, 8 jeweils ausfüllende Preßplatten 16, 17 angeordnet, die in bekannter Weise über in der Zeichnung nicht dargestellte Zylinder-Kolben-Einheiten in Längsrichtung des Sammelbehälters 5 verschiebbar sind und mit denen die Wertstoffe aus den einzelnen Kammern 7, 8 gleichzeitig oder zeitlich nacheinander ausgestoßen werden können.

Damit die mit dem Müllfahrzeug 1 getrennt eingesammelten und beförderten Wertstoffe auch nach dem Entladen voneinander getrennt bleiben, besitzt die Entleerungsstation 2 etwa in Höhe des Bodens 18, auf dem das Müllfahrzeug 1 während des Entladevorgangs steht, zwei durch eine Trennwand 19 voneinander getrennte Entleerungsöffnungen 20, 21, die durch getrennte Fallschächte 22, 23 zu jeweils einer tiefer als die Entleerungsöffnungen 20, 21 gelegenen Transporteinrichtungen, beispielsweise Transportbänder 24, 25 führen, mit denen die Wertstoffe in Richtung der Pfeile 26, 27 getrennt zu nicht dargestellten größeren Sammelbehältern, beispielsweise Eisenbahnwaggons, oder auch zu Zwischendeponien oder Weiterverarbeitungsanlagen gefördert werden.

Um in jeder Phase des Entladungsvorgangs die Trennung der unterschiedlichen Wertstoffe aufrechtzuerhalten, ist die Trennwand 19 zwischen den Entleerungsöffnungen 20, 21 bis an die Peripherie 14 des Schwenkkreises der zusammen mit der Tür 9 verschwenkbaren Trennwand 10 des Müllfahrzeugs 1 hochgezogen und im Anschlußbereich zur angrenzenden Trennwand 10 des Müllfahrzeugs 1 mit einer Ausnehmung 28 versehen, die mit der kreisbogenförmigen Außenkontur der Trennwand 10 korrespondiert. Damit sich jedoch die Tür 9 des Müllfahrzeugs 1 überhaupt zum Entladen hochschwenken läßt, ist sie in der Ebene, in der die Trennwand 10 zwischen den Einfüllöffnungen 11, 12 liegt, am freien Ende 29 der Tür 9, d. h. an ihrem dem an der Schwenkachse 13 angelenkten Ende gegenüberliegenden Ende mit einem Schlitz 30 versehen, der in Anpassung an die zugehörige Trennwand 19 der Entleerungsstation 2 von der Unterseite her sich über die Dicke der Tür 9 erstreckt und bis an die verschwenkbare Trennwand 10 heranreicht.

In der dargestellten Entleerungsstellung mit hochgeschwenkter Tür 9 und aus dem Sammelbehälter 5 ausgeschwenkter Trennwand 10 ragt das obere, nicht mit der Ausnehmung 28 versehene Ende der Trennwand 19 der Entleerungsstation 2 in diesen Schlitz 30 hinein; dadurch ist es möglich, die mit der kreisbogenförmigen Ausnehmung 28 und dem Kreisbogen am Außenumfang aneinandergrenzenden Trennwände 10, 19 des Müllfahrzeuges 1 und der Entleerungsstation 2 so nahe aneinanderzubringen, daß durch die Trennwand 10 an der Tür 9 der sonst trennwandlose Bereich zwischen dem Müllfahrzeug 1 und der Entleerungsstation 2 weitgehend überbrückt wird und in jeder Phase des Entleerungsvorgangs eine unerwünschte Vermischung der voneinander getrennten Wertstoffe verhindert wird.

Da die Trennwände 6, 10, 19 des Müllfahrzeugs 1 und der Entleerungsstation 2 beim Entladen in der selben Vertikalebene hintereinander angeordnet sein müssen, um auch weiterhin die Trennung der Wertstoffe voneinander zu garantieren, ist für das üblicherweise rückwärts an der Entleerungsstation 2 anlegende Müllfahrzeug 1 eine Fahrbahn 32 mit Spurführung 33 vorteilhaft, die kurz vor den Entleerungsöffnungen 20, 21 an einer Schwellenkante 34 für die hinteren Fahrzeugräder 35 endet. Das zum Entladen bis zu dieser Schwellenkante 34 zurückgesetzte Müllfahrzeug 1 erhält dadurch eine Entleerungsposition, in der ein minimaler Abstand der Trennwände 10, 19 des Müllfahrzeugs 1 von der Entleerungsstation 2 gewährleistet ist.

Darüber hinaus kann zumindest der oberhalb der Entleerungsöffnungen 20, 21 gelegene Abschnitt 36 der zwischen diesen Öffnungen 20, 21 angeordneten Trennwand 19 in seiner Längsrichtung und/oder Höhe verstellbar sein, um ein völliges Anliegen der im Anschlußbereich aneinandergrenzenden Trennwände 10, 19 des Müllfahrzeugs 1 und der Entleerungsstation 2 zu erreichen und die Wertstoffe hermetisch voneinander getrennt zu entladen.

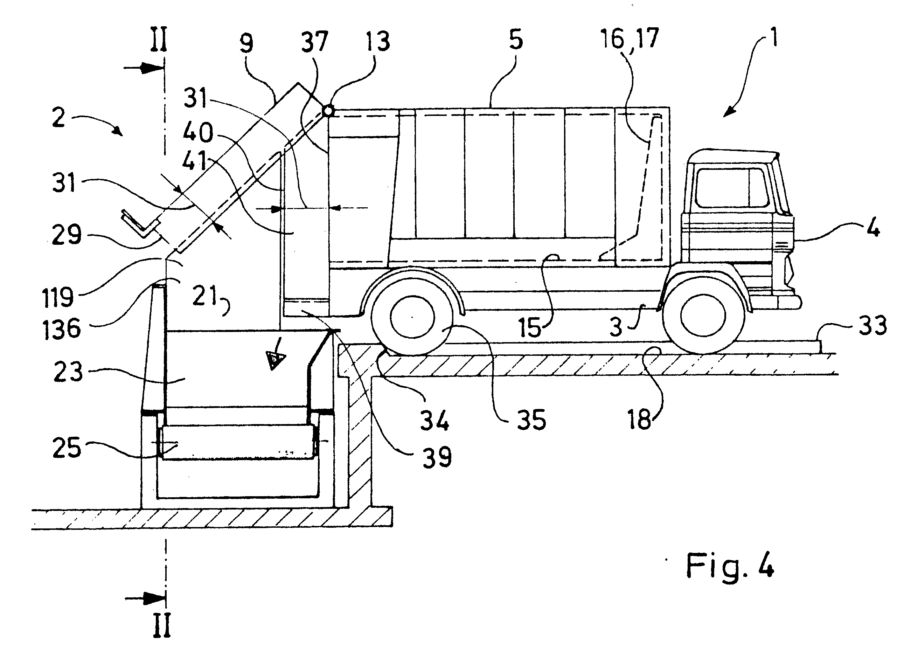

In den Fig. 4 bis 6 ist eine Ausführungsform der Erfindung dargestellt, mit der in besonders vorteilhafter Weise die Forderung berücksichtigt wird, daß — auch unterschiedlich schwer beladene — Fahrzeuge möglichst dicht an die ortsfeste Trennwand der Entleerungsstation herangefahren werden können, ohne daß sich bei sich aus den Federn hebendem Fahrzeug während des Entladens eine Verschlechterung des Trenneffektes durch einen sich vergrößernden Spalt zwischen korrespondierenden Trennwänden auftritt. Da der Aufbau beider Ausführungsformen überwiegend übereinstimmt, werden für gleiche Bauteile dieselben Bezugsziffern verwendet; aus dem gleichen Grunde wird nachfolgend auf eine detaillierte Beschreibung dieses Ausführungsbeispiels verzichtet, vielmehr werden lediglich die gegenüber dem zuvor erläuterten Ausführungsbeispiel bestehenden Unterschiede herausgestellt.

Bei dem vorliegenden Ausführungsbeispiel entfällt die beim zuvor beschriebenen Beispiel vorgesehene Trennwand 10 bei gleichzeitiger konstruktiver Änderung der nunmehr mit 119 bezeichneten Trennwand der Entleerungsstation. Die Funktion der erwähnten Trennwand 10 wird durch eine Verlängerung der Trennwand 6 nach hinten über das türseitige Ende 37 des Sammelbehälters 5 hinaus erreicht, und zwar um einen mindestens der Dicke 31 der Tür 9 entsprechenden Betrag. Dadurch entsteht ein Trennwandteil 41, das bei geschlossener Tür 9 in diese hineinragt bzw. diese durchdringt, wofür in der Tür 9 eine entsprechende schlitzförmige, in der Ebene der Trennwand 6 verlaufende Ausnehmung 130 vorgesehen ist, die sich bis nahe zur Schwenkachse 13 erstreckt.

Da selbstverständlich die Zuordnung der Schwellenkante 34 zum türseitigen Behälterende 37 einerseits und deren Position zu den Fallschächten 22 und 23 bzw. der Entleerungsstation 2 andererseits in Entladeposition nicht ändert gegenüber der vergleichbaren Position beim ersten Ausführungsbeispiel, folgt durch die Ausbildung der Trennwand 6 mit rückseitiger Verlängerung eine geänderte Form für die Trennwand 119 im oberhalb der Entleerungsöffnungen 20, 21 gelegenen Abschnitt 136. Dieser ist nämlich etwa um den der Verlängerung entsprechenden Betrag 31 von der dem Fahrzeug 1 zugekehrten Seite der Entleerungsstation zurückspringend ausgebildet, und zwar ebenfalls mit einer vertikalen Abschlußkante, die mit der freien, rückwärtigen vertikalen Abschlußkante 40 des Trennwandteils 41 korrespondiert, d. h. das Müllfahrzeug 1 kann praktisch bis zur Anlage der beiden genannten Abschlußkanten aneinander die Trennwand 119 anfahren. Durch den vertikalen Verlauf der beiden Kanten sind Höhenunterschiede, die sich einerseits durch unterschiedliche Fahrzeugtypen und andererseits durch unterschiedliche Beladungszustände aufgrund mehr oder weniger belasteter Fahrzeugaufhängungen ergeben, ohne Auswirkungen auf die Spaltbreite.

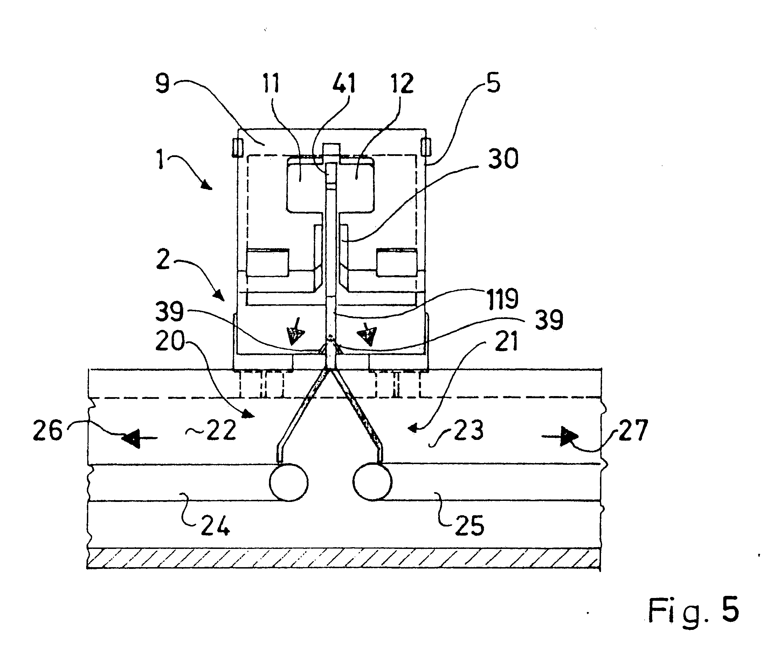

Zwischen der unteren, horizontalen Kante der Trennwandverlängerung 41 und der damit korrespondierenden Oberkante der Entleerungsstation 2 bzw. deren Füllschächten 22, 23 wird ein Abstand eingehalten, der den unterschiedlichen, zuvor erwähnten Sammelbehälterhöhen entspricht. Um auch jede Gefahr eines Vermischens im Bereich dieses einzuhaltenden Abstandes zu vermeiden, sind vorzugsweise auf jeder Seite der Trennwandverlängerung 41 im Bereich der unteren horizontalen Kante je ein Abweiser 39 vorgesehen, die gemäß Fig. 5 aufgrund ihrer insgesamt dachförmigen Winkellage das aus dem Sammelbehälter austretende Material trennscharf über den Horizontalspalt hinweggleiten.

Wie aus Fig. 4 hervorgeht, verläuft die Oberkante der Trennwand 119 der Entleerungsstation geneigt, und zwar vorzugsweise entsprechend dem üblichen Öffnungswinkel der Tür 9. In Fortsetzung dieser Neigung verläuft auch die Oberkante der Trennwandverlängerung 41 unter demselben Winkel, so daß sich für den in der Tür 9 vorzusehenden Schlitz 130 die Forderung ergibt, zumindest bis zur Höhe der oberen Spitze der Trennwand 119 im Falle einer der Türdicke entsprechenden Verlängerung der Trennwand 6 durch die Tür 9 hindurchzureichen, während von da ab nach oben eine Ausnehmung in einem dem Verlauf der Oberkante der Verlängerung 41 entsprechenden Winkel ausreicht.

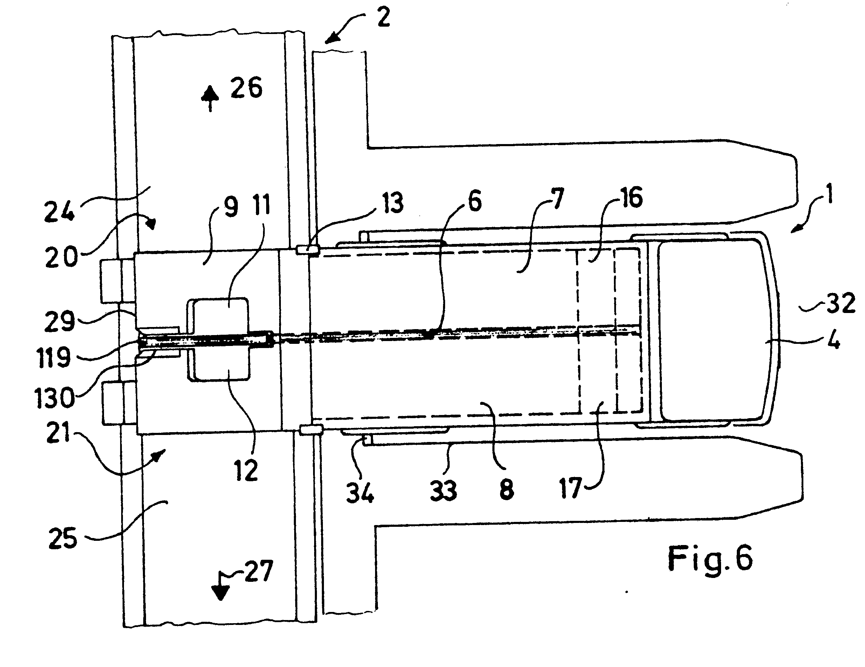

Im dargestellten Ausführungsbeispiel (siehe insbesondere Fig. 5 und 6) gehen die beiden Einzelöffnungen 11 und 12 trennungslos ineinander über. Es ist jedoch auch ohne weiteres möglich, die Einzelöffnungen 11 und 12 im zugehörigen Türteil jeweils mittig anzuordnen, so daß sie getrennte Ausnehmungen bilden. Da der freie Durchlaß der Einzelöffnungen 11 und 12 wegen der Trennwandverlängerung 41 und ihrer speziellen oberseitigen Anpassung an den Schwenkwinkel der Tür 9 jedoch während sämtlicher Betriebsphasen des Müllfahrzeuges und Winkelstellungen der Tür 9 durch die Trennwandverlängerung 41 eine mittige Unterteilung erfahren, wird auch mit der dargestellten, hinsichtlich der Türausnehmungen sowohl herstellungsmäßig einfacher als auch festigkeitsmäßig optimaler gestalteten Ausführungsform eine zuverlässige Trennung auch während der Beladung erreicht, die beim eingangs beschriebenen Ausführungsbeispiel ohnehin durch die fest installierte Trennwand 10 garantiert wird.

Es versteht sich, daß für dieses Ausführungsbeispiel eine doppelwandige Ausführung der Trennwand 6 nicht erforderlich ist.

Im übrigen kann der Sammelbehälter 5 des Müllfahrzeugs 1 im Gegensatz zu dem in der Zeichnung dargestellten Ausführungsbeispiel auch in mehr als nur zwei Kammern 7, 8 unterteilt sein, so daß ein Sammelbehälter z. B. drei durch Trennwände voneinander getrennte Kammern für unterschiedliche Wertstoffe, beispielsweise Glas, Papier und Restmüll, besitzt. Das Volumenverhältnis der Kammern braucht dabei nicht gleich zu sein, sondern kann den Raumbedarf der in unterschiedlichen Mengen anfallenden Wertstoffe und ihre unterschiedliche Stoffdichte sowie Schüttdichte berücksichtigen. Bei einer derartigen Ausführung sind die zugehörigen Trennwände an der Tür des Sammelbehälters sowie an der Entleerungsstation entsprechend den Kammertrennwänden angeordnet.

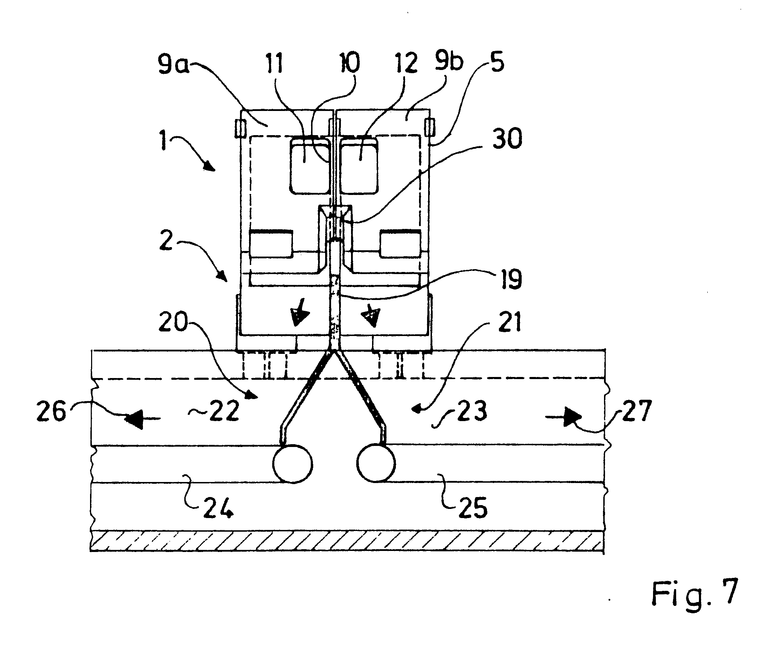

Bei einer weiteren Ausführung gemäß Fig. 7 kann jede Kammer des Sammelbehälters 5 eine Tür 9a bzw. 9b mit einer Einfüllöffnung 11 bzw. 12 aufweisen; die aneinandergrenzenden Türen lassen sich zum Entladen alle oder zu mehreren gleichzeitig oder in beliebiger Reihenfolge nacheinander öffnen. Um die Wertstoffe beim gleichzeitigen Entladen getrennt voneinander zu halten, sind an den einzelnen Türen Trennwände in der Weise angeordnet, daß von den aneinandergrenzenden Türen jeweils mindestens eine an der der angrenzenden Tür zugewandten Seite mit einer Trennwand versehen ist. Dadurch werden doppelte Trennwände zwischen aneinandergrenzenden Türen vermieden. Bei einem Müllfahrzeug mit mehreren mit Trennwänden ausgestatteten Türen ist es möglich, die getrennt eingesammelten Wertstoffe gleichzeitig an einer Entleerungsstation abzuladen, während der Restmüll in einer weiteren Kammer zurückbehalten und anschließend zu einer Deponie oder Verbrennungsanlage befördert wird.

## Patentansprüche

1. Müllsammel- und Transportsystem unter Verwendung eines Müllfahrzeugs (1) mit einem durch mindestens eine Trennwand (6) in mindestens zwei separate Kammern (7, 8) unterteilten Sammelbehälter (5), wobei jeder Kammer (7, 8) jeweils mindestens eine Einfüllöffnung (11 bzw. 12) zugeordnet ist und die Einfüllöffnungen (11, 12) mit jeweils mindestens einer dazwischen angeordneten Trennwand (10) nebeneinander in mindestens einer hochschwenkbaren, den Sammelbehälter (5) verschließenden Tür (9) angeordnet sind, und jede Trennwand (10) zwischen den Einfüllöffnungen (11, 12) in Schließlage der Tür (9) an die entsprechende Trennwand (6) zwischen den Kammern (7, 8) anschließt, und einer Entleerungsstation (2) mit Entleerungsöffnungen (20, 21) und jeweils einer zwischen diesen, der zugehörigen Trennwand (10) zwischen den Einfüllöffnungen (11, 12) des Müllfahrzeugs (1) entsprechend angeordneten Trennwand (19), dadurch gekennzeichnet, daß jeder Trennwand (6) des Müllfahrzeuges (1) eine Verbindungswand (10) zugeordnet ist, die einen dichten Anschluß jeder Trennwand (6) an zugeordnete Trennwände (19) der Entleerungsstation (2) bereits zu Beginn des Öffnens der Tür (9) sicherstellt.

2. Müllsammel- und Transportsystem nach Anspruch 1, dadurch gekennzeichnet, daß jede Trennwand (10) zwischen den Einfüllöffnungen (11, 12) über die Dicke (31) der Tür (9) hinaus soweit verlängert ist, daß sie (10) einerseits die entsprechende Trennwand (6) zwischen den Kammern (7, 8) ausreichend weit überlappt, um bei hochgeschwenkter Tür (9) noch an die zugehörige Trennwand (6) zwischen den Kammern (7, 8) anzuschließen, und andererseits bereits bei noch geschlossener Tür (9) des an der Entleerungsstation (2) anlegenden Müllfahrzeuge (1) nahe an die zugehörige Trennwand (19) zwischen den Entleerungsöffnungen (20, 21) heranragt.

3. Müllsammel- und Transportsystem nach Anspruch 1 oder 2, dadurch gekennzeichnet, daß die zwischen den Einfüllöffnungen (11, 12) der Tür (9) angeordnete(n) Trennwand oder Trennwände (10) jeweils etwa die Form eines Kreissektors aufweist (aufweisen), bei dem der Mittelpunkt des Kreises auf der Schwenkachse (13) der Tür (9) liegt.

4. Müllsammel- und Transportsystem nach einem der Ansprüche 1 bis 3, dadurch gekennzeichnet, daß die Trennwand oder Trennwände (10) zwischen den Einfüllöffnungen (11, 12) der Tür (9) jeweils dicht neben der zugehörigen Trennwand (6) des Sammelbehälters (5) in diesen einschwenkbar ist (sind).

5. Müllsammel- und Transportsystem nach einem der Ansprüche 1 bis 3, dadurch gekennzeichnet, daß die Trennwand oder Trennwände (6) des Sammelbehälters (5) zur Aufnahme der jeweils zugehörigen in den Sammelbehälter (5) einschwenkbaren Trennwand (10) zwischen den Einfüllöffnungen (11, 12) doppelwandig ausgebildet ist (sind).

6. Müllsammel- und Transportsystem nach einem der Ansprüche 1 bis 5, dadurch gekennzeichnet, daß die Trennwand oder Trennwände (19) zwischen den Entleerungsöffnungen (20, 21) der Entleerungsstation (2) bis an die Peripherie (14) des Schwenkkreises der verschwenkbaren Tür (10) heranragen und im Anschlußbereich zu der jeweils zugehörigen verschwenkbaren Trennwand (10) zwischen den Einfüllöffnungen (11, 12) der Tür (9) jeweils eine mit dieser Trennwand (10) korrespondierende konzentrische Ausnehmung (28) aufweisen.

7. Müllsammel- und Transportsystem nach einem der Ansprüche 1 bis 6, dadurch gekennzeichnet, daß die Tür (9) des Müllfahrzeugs (1) jeweils in der oder den die Trennwand (10) zwischen den Einfüllöffnungen (11, 12) enthaltenden Ebene(n) einen Schlitz (30), vorzugsweise am freien Ende (29) der Tür (9) aufweist, der zum Anpassen der jeweils zugehörigen Trennwand (19) der Entleerungsstation (2) von der Unterseite her sich über die Dicke (31) der Tür (9) erstreckt und bis an die verschwenkbare Trennwand (10) an der Tür (9) heranragt.

8. Müllsammel- und Transportsystem nach einem der Ansprüche 1 bis 7, dadurch gekennzeichnet, daß zumindest der über die Entleerungsöffnungen (20, 21) nach oben ragende Abschnitt (36) der zwischen diesen Öffnungen (20, 21) angeordneten Trennwand oder -wände (19) in seiner Längsrichtung und/oder Höhe verstellbar ist.

9. Müllsammel- und Transportsystem nach einem der Ansprüche 1 bis 8, dadurch gekennzeichnet, daß das Müllfahrzeug (1) für jede Kammer (7, 8) des Sammelbehälters (5) eine Tür mit mindestens einer Einfüllöffnung aufweist und von den aneinandergrenzenden Türen jeweils mindestens eine an der angrenzenden Tür zugewandten Seite mit einer Trennwand versehen ist.

10. Müllsammel- und Transportsystem unter Verwendung eines Müllfahrzeugs (1) mit einem durch mindestens eine Trennwand (6) in mindestens zwei separate Kammern (7, 8) unterteilten Sammelbehälter (5), wobei jeder Kammer (7, 8) jeweils mindestens eine Einfüllöffnung (11 bzw. 12) zugeordnet ist und die Einfüllöffnungen (11, 12) nebeneinander in mindestens einer hochschwenkbaren, den Sammelbehälter (5), verschließenden Tür (9) angeordnet sind, und einer Entleerungsstation (2) mit Entleerungsöffnungen (20, 21) und jeweils einer zwischen diesen angeordneten Trennwand (119), dadurch gekennzeichnet, daß die zwischen den Kammern (7, 8) befindliche Trennwand (6) über das türseitige Ende (37) des Sammelbehälters (5) hinaus um einen mindestens der Dicke (31) der im Bereich der die Trennwand (6) enthaltenden Ebene geschlitzten Tür (9) entsprechenden Betrag verlängert ist und mit ihrer freien, vertikalen Abschlußkante (40) mit einer ebenfalls vertikalen Abschlußkante der Trennwand (119) der Entleerungsstation (2) korrespondiert.

11. Müllsammel- und Transportsystem nach Anspruch 10, dadurch gekennzeichnet, daß die vertikale Abschlußkante der Trennwand (119) der Entleerungsstation (2) von der dem Fahrzeug (1) zugewandten Seite der Entleerungsstation (2) derart zurückspringt, daß die über den Sammelbehälter (5) nach hinten hinausragende Verlängerung (41) der Trennwand (6) in der Trennwandebene gleichsam L-förmig umgegriffen wird.

12. Müllsammel- und Transportsystem nach Anspruch 10 oder 11, gekennzeichnet durch einen mindestens dem Federweg der Müllfahrzeugfederung entsprechenden Abstand bei entladenem Fahrzeug (1) zwischen der unteren, horizontalen Kante der Trennwandverlängerung (41) und der damit korrespondierenden Oberkante der Entleerungsstation (2) bzw. deren Füllschächten (22, 23).

13. Müllsammel- und Transportsystem nach einem der Ansprüche 10 bis 12, gekennzeichnet durch je einen Abweiser (39) auf jeder Seite der Trennwandverlängerung (41) im Bereich ihrer unteren horizontalen Kante.

14. Müllsammel- und Transportsystem nach einem der Ansprüche 10 bis 13, dadurch gekennzeichnet, daß das Müllfahrzeug (1) für jede Kammer (7, 8) des Sammelbehälters (5) eine Tür mit mindestens einer Einzelöffnung aufweist und sich zwischen benachbarten Türen jeweils eine Trennwandverlängerung (41) erstreckt.

**Claims**

1. Garbage collecting and transporting system using a garbage truck (1) having a collecting vessel (5) subdivided by at least one partition (6) into at least two separate chambers (7, 8), at least one filler opening (11, 12 respectively) being associated with each chamber (7, 8) and the filler openings (11, 12) being disposed, with at least one partition (10) diposed therebetween, alongside one another in at least one upwardly pivotal door (9) for closing the collecting vessel (5), and each partition (10) between the filler openings (11, 12) adjoining the corresponding partition (6) between the chambers (7, 8) in the closed position of the door (9), and comprising a discharge station (2) having discharge openings (20, 21) and one partition (19) each between these openings, disposed corresponding to the associated partition (10) between the filler openings (11, 12) of the garbage truck (1), characterized in that there is associated with each partition (6) of the garbage truck (1) a connecting wall (10), which assures a tight connection of each partition (6) to associated partitions (19) of the discharge station (2) right at the start of opening of the door (9).

2. Garbage collecting and transporting system according to claim 1, characterized in that each partition (10) between the filler openings (11, 12) is extended beyond the thickness (31) of the door (9) sufficiently far that, on the one hand, it (10) overlaps the corresponding partition (6) between the chambers (7, 8) by a sufficient amount still to adjoin the associated partition (6) between the chambers (7, 8) when the door (9) is pivotted upwards and, on the other hand, that it reaches near to the associated partition (19) between the discharge openings (20, 21) when the door (9) of the garbage truck (1) fitted against the discharge station (2) is still closed.

3. Garbage collecting and transporting system according to claim 1 or 2, characterized in that the partition or partitions (10) disposed between the filler openings (11, 12) of the door (9) each have approximately the form of a circular sector, wherein the centre point of the circle lies on the pivot axis (13) of the door (9).

4. Garbage collecting and transporting system according to one of claims 1 to 3, characterized in that the partition or partitions (10) between the filler openings (11, 12) of the door (9) can each be pivotted in closely alongside the associated partition (6) of the collecting vessel (5) into this vessel.

5. Garbage collecting and transporting system according to one of claims 1 to 3, characterized in that the partition or partitions (6) of the collecting vessel (5) are of double-wall construction for receiving each the associated partition (10) between the filler openings (11, 12), which can be pivotted into the collecting vessel (5).

6. Garbage collecting and transporting system according to one of claims 1 to 5, characterized in that the partition or partitions (19) between the discharge openings (20, 21) of the discharge station (2) extend as far as the periphery (14) of the pivotting circle of the pivotal door (10) and possess, in the adjoining region to the pivotal partition (10), associated with each of them, between the filler openings (11, 12) of the door (9), each a concentric recess (28) corresponding with this partition (10).

7. Garbage collecting and transporting system according to one of claims 1 to 6, characterized in that the door (9) of the garbage truck (1) possesses, in the plane or each of the planes containing the partition (10) between the filler openings (11, 12), a slit (30), preferably at the free end (29) of the door (9), which extends from the underside through the thickness (31) of the door (9) and as far as the pivotal partition (10) at the door (9) for the purpose of fitting to the associated partition (19) of the discharge station (2).

8. Garbage collecting and transporting system according to one of claims 1 to 7, characterized in that at least the portion (36), projecting above the discharge openings (20, 21) of the partition or partitions (19) disposed between these openings (20, 21) is adjustable in its longitudinal direction and/or height.

9. Garbage collecting and transporting system according to one of claims 1 to 8, characterized in that the garbage truck (1) possesses for each chamber (7, 8) of the collecting vessel (5), a door having at least one filler opening, and of the mutually adjacent doors at least one is equipped with a partition on the side towards the adjacent door.

10. Garbage collecting and transporting systems using a garbage truck (1) having a collecting vessel (5) subdivided by at least one partition (6) into at least two separate chambers (7, 8), at least one filler opening (11, 12 respectively) being associated with each chamber (7, 8) and the filler openings (11, 12) being disposed alongside one another in at least one upwardly pivotal door (9) for closing the collecting vessel (5), and comprising a discharge station (2) having discharge openings (20, 21) and a partition (119) each disposed between these discharge openings, characterized in that the partition (6) situated between the chambers (7, 8) is extended beyond the end (37) nearest to the door of the collecting vessel (5) by an amount corresponding at least to the thickness (31) of the door (9), which is slit in the region of the plane containing the partition (6), and corresponds, with its free, vertical terminating edge (40), with a likewise vertical terminating edge of the partition (119) of the discharge station (2).

11. Garbage collecting and transporting system according to claim 10, characterized in that the vertical terminating edge of the partition (119) of the discharge station (2) steps back from the side of the discharge station (2) which is towards the truck (1) in such a manner that the extension (41), projecting backwards beyond the collecting vessel (5), of the partition (6) is encompassed by it so to speak in an L-shaped pattern in the plane of the partition.

12. Garbage collecting and transporting system according to claim 10 or 11, characterized by a distance corresponding, when the truck (1) is unloaded, at least to the spring travel of the garbage truck suspension, between the lower, horizontal edge of the partition extension (41) and the upper edge, corresponding therewith, of the discharging station (2) and its filler shafts (22, 23).

13. Garbage collecting and transporting system according to one of claims 10 to 12, characterized hy a deflector (39), on each side of the partition etension (41), in the region of its lower, horizontal edge.

14. Garbage collecting and transporting system according to one of claims 10 to 13, characterized in that the garbage truck (1) possesses, for each chamber (7, 8) of the collecting vessel (5), a door having at least one single opening and that a partition etension (41) extends between each two adjacent doors.

**Revendications**

1. Système de ramassage et de transport des ordures comportant l'utilisation d'un véhicule à ordures (1) comprenant un récipient de ramassage (5) subdivisé par au moins une paroi de séparation (6) en au moins deux chambres séparées (7, 8), chambre (7, 8) comportant au moins une ouverture de remplissage (11 ou 12) et les ouvertures de remplissage (11, 12), séparées par au moins une paroi de séparation (10) située entre elles, étant disposées l'une à côté de l'autre dans au moins une porte (9) pouvant pivoter vers le haut et fermant le récipient de ramassage (5) et chaque paroi de séparation (10) située entre les ouvertures de remplissage (11, 12) se raccordant, dans la position de fermeture de la porte (9), à la paroi de séparation (6) correspondante située entre les chambres (7, 8), et une installation de vidage (2) comportant des ouvertures de vidage (20, 21) et une paroi de séparation (19) située entre ces ouvertures de manière à correspondre à la paroi de séparation (10) située entre les ouvertures de remplissage (11, 12) du véhicule à ordures (1), caractérisé en ce qu'à chaque paroi (6) du véhicule à ordures (1) correspond une paroi de liaison (10) qui assure un raccordement étanche entre la paroi de séparation (6) et les parois de séparation correspondantes (19) de l'installation de vidage (2) dès le début de l'ouverture de la porte (9).

2. Système de ramassage et de transport des ordures selon la revendication 1, caractérisé en ce que chaque paroi de séparation (10) située entre les ouvertures de remplissage (11, 12) se prolonge suffisamment au-delà de l'épaisseur (31) de la porte (9) pour que, d'une part, elle (10) recouvre suffisamment la paroi correspondante (6) située entre les chambres (7, 8) pour se raccorder encore, même lorsque la porte (9) a pivoté vers le haut, à la paroi correspondante (6) située entre les chambres (7, 8) et, d'autre part, lorsque la porte (9) du véhicule à ordures (1) est encore accolée à l'installation de vidage (2), ellearrice jusqu'à la paroi de séparation correspondante (19) située entre les ouvertures de vidage (20, 21).

3. Système de ramassage et de transport des ordures selon l'une des revendications 1 ou 2, caractérisé en ce que la ou les parois de séparation (10) situées entre les ouvertures de remplissage (11, 12) de la porte (9) ont la forme d'un secteur circulaire pour lequel le centre du cercle se trouve sur l'axe de pivotement (13) de la porte (9).

4. Système de ramassage et de transport des ordures selon l'un des revendications 1 à 3, caractérisé en ce que la ou les parois de séparation (10) situées entre les ouvertures de remplissage (11, 12) de la porte (9) peut ou peuvent pivoter en restant à proximité immédiate de la paroi de séparation (6) pour pénétrer dans le récipient de ramassage (5).

5. Système de ramassage et de transport des ordures selon l'une des revendications 1 à 3, caractérisé en ce que la ou les parois de séparation (6) du récipient de ramassage (6) est ou sont constituées, entre les ouvertures de remplissage (11, 12), par une paroi double, de manière à pouvoir recevoir la paroi de séparation (10) correspondante qui pénètre par pivotement dans le récipient de ramassage (5).

6. Système de ramassage et de transport des ordures selon l'une des revendications 1 à 8, caractérisé en ce que la ou les parois de séparation (19) situées entres les ouvertures de vidage (20, 21) de l'installation de vidage (2) s'étendent jusqu'à la périphérie (14) du cercle de pivotement de la porte basculante (9) et en ce dans la zone de raccordement à la paroi à la paroi de séparation pivotante (10) correspondante située entre les ouvertures de remplissage (11, 12) de la porte (9), elle ou elles présentent une découpure circulaire (28) correspondant au contour de la paroi de séparation (10) et de même centre qu'elle.

7. Système de ramassage et de transport des ordures selon l'une des revendications 1 à 6, caractérisé en ce que chaque porte (9) du véhicule à ordures (1) comporte, dans le ou les plans contenant paroi (10) située entre les ouvertures de remplissage (11, 12), une fente (30) qui est située de préférence à l'extrémité libre (29) de la porte (9) et, pour être adaptée à la paroi de séparation correspondante (19) de l'installation de vidage (2), pénètre, depuis le bord inférieur, dans l'épaisseur (31) de la porte et s'étend jusqu'à la paroi de séparation pivotante (10 de la porte (9).

8. Système de ramassage et de transport des ordures selon l'une des revendications 1 à 7, caractérisé en ce qu'au moins la partie (36) de la ou des parois (19) situées entre les ouvertures de vidage (20, 21) qui se trouve au-dessus de ces ouvertures (20, 21) est réglable en longueur et/ou en hauteur.

9. Système de ramassage et de transport des ordures selon l'une des revendications 1 à 8, caractérisé en ce que le véhicule à ordures (1) comprend, pour chaque chambre (7, 8) du récipient de ramassage (5), une porte comportant au moins une ouverture de remplissage et que, de deux portes voisines l'une au moins est munie, au moins du côté de la porte voisine, d'une paroi de séparation.

10. Système de ramassage et de transport des ordures comportant l'utilisation d'un véhicule à ordures (1) comprenant un récipeint de ramassage (5) subdivisé par au moins une paroi de séparation (6) en au moins deux chambres séparées (7, 8), chaque chambre (7, 8) comportant au moins une ouverture de remplissage (11 ou 12) et les ouvertures de remplissage (11, 12) étant disposées l'une à côté de l'autre dans au moins une porte (9) pouvant pivoter vers le haut et fermant le récipient de ramassage (5), et une installation de vidage (2) comportant des ouvertures de vidage (20, 21) et une paroi de séparation (119) située entre elles, caractérisé en ce que la paroi de séparation (6) située entre les chambres (7, 8) se prolonge, au-delà de l'extrémité (37) située au niveau de la porte du récipient de ramassage (5), d'une quantité qui correspond au moins à l'épaisseur (31) de la porte (9) qui comporte une fente dans le plan contenant la paroi de séparation (6) et, par son bord de fermeture (40) vertical libre, s'adapte à un bord de fermeture également vertical de la paroi de séparation (119) de l'installation de vidage (2).

11. Système de ramassage et de transport des ordures selon la revendication 10, caractérisé en ce que le bord de fermeture vertical de la paroi (119) de l'installation de vidage (2) est en retrait par rapport au côté de l'installation de vidage (2) qui est tourné vers le véhicule (1) de telle manière que le prolongement (41) de la paroi de séparation (6) qui dépasse vers l'arrière au-delà du récipient de ramassage (5) s'incère dans une découpure en forme d'L dans le plan de la paroi de séparation.

12. Système de ramassage et de transport des ordures selon l'une des revendications 10 ou 11, caractérisé en ce qu'il y a, lorsque le véhicule (1) est déchargé, une distance correspondant au moins au trajet élastique de la suspension du véhicule à ordures entre le bord horizontal inférieur du prolongement (41) de la paroi de séparation et le bord supérieur correspondant de l'installation de vidage (2) ou de ses cuves de chargement (22, 23).

13. Système de ramassage et de transport des ordures selon l'une des revendications 10 à 12, caractérisé en ce qu'il comporte un dispositif de déviation (39) de chaque côté du prolongement (41) de la paroi de séparation dans la zone de son bord horizontal.

14. Système de ramassage et de transport des ordures selon l'une des revendications 1 à 13, caractérisé en ce que le véhicule à ordures (1) comporte, pour chaque chambre (7, 8) du récipient de ramassage (5), une porte comportant au moins une ouverture individuelle et entre deux portes voisines, un prolongement (41) de la paroi de séparation.

Fig. 1

Fig. 2

0 060 966

Fig. 3

0 060 966

Fig. 4

Fig. 5

0 060 966

Fig.6

Fig. 7